# EUROPEAN PATENT APPLICATION

(11) **EP 4 831 019 A1**
(43) Date of publication of application: **28.10.2026**
(21) Application number: 24829580.0
(22) Date of filing: 29.11.2024
(51) Int. Cl.: B60T 8/32, B60T 8/17, B60T 8/175, B60T 8/1761

(54) **WHEEL SLIP CONTROL APPARATUS FOR A STRADDLE-TYPE VEHICLE AND CONTROL METHOD**

(30) Priority: 22.12.2023 JP 2023217438
(71) Applicant: Robert Bosch GmbH, 70442 Stuttgart (DE)
(72) Inventor: IWATSUKI, Junya, Yokohama-shi, Kanagawa 224-8501 (JP); SASAKI, Kento, Yokohama-shi, Kanagawa 224-8501 (JP)
(74) Representative: Isarpatent
(86) International application number: PCT/IB2024/062021
(87) International publication number: WO 2025/133778

(57) **Abstract**

The present invention provides a control apparatus and a control method capable of optimizing slip control in a straddle-type vehicle.

In a control apparatus and a control method according to the present invention, an execution unit of the control apparatus executes slip control in which front-wheel pressure-reduction operation and rear-wheel pressure-reduction operation are performed. In the front-wheel pressure-reduction operation, a front-wheel outlet valve (62a) is caused to become an open state from a close state and then is returned to the close state. The front-wheel outlet valve (62a) becomes the open state when energized and thus reduces pressure of brake fluid at a front wheel (2). In the rear-wheel pressure-reduction operation, a rear-wheel outlet valve (62b) is caused to become an open state from a close state and then is returned to the close state. The rear-wheel outlet valve (62b) becomes the open state when energized and thus reduces pressure of brake fluid at a rear wheel (3). The execution unit executes, in the slip control, prohibition operation to prohibit the rear-wheel outlet valve (62b) from becoming the open state at at least one point in time in a valve-closing period that is a period from a start to completion of closing of the front-wheel outlet valve (62a) at ending of the front-wheel pressure-reduction operation.

## Description

### Technical Field

The present disclosure relates to a control apparatus and a control method capable of optimizing slip control in a straddle-type vehicle.

### Background Art

Conventionally, a control apparatus that controls behavior of a straddle-type vehicle includes a control apparatus that can execute slip control to control a slipping state of a wheel of a straddle-type vehicle by controlling pressure of brake fluid at the wheel. For example, the slip control includes, as disclosed in PTL 1, control in which an outlet valve that reduces pressure of brake fluid at a wheel is caused to become an open state from a close state to perform operation to reduce braking force caused at the wheel.

### Citation List

### Patent Literature

PTL 1: JP2018-024324A

### Summary of Invention

### Technical Problem

As described above, in the slip control, the outlet valve is driven to perform pressure-reduction operation to reduce pressure of brake fluid. Particularly, in a straddle-type vehicle, the pressure-reduction operation may be performed with respect to each of a front wheel and a rear wheel in an individual manner. Here, the straddle-type vehicle has a limited space for mounting devices as compared with a four-wheeled automobile or the like. Therefore, a front-wheel outlet valve that is used in the pressure-reduction operation for the front wheel, and a rear-wheel outlet valve that is used in the pressure-reduction operation for the rear wheel may be disposed closely to one another. In this case, influence of a magnetic field generated in association with driving of one of the outlet valves may cause a situation in which behavior of the other one of the outlet valves deviates from expected behavior. Specifically, in the case in which a magnetic field is generated in association with driving of one of the outlet valves, closing of the other one of the outlet valves may take longer time and a situation in which a pressure-reduction amount of brake fluid by the other one of the outlet valves increases more than expected may occur. Such a phenomenon may be a factor for difficulty in appropriate execution of the slip control.

The present invention is made in view of the problem, and provides a control apparatus and a control method capable of optimizing slip control in a straddle-type vehicle.

### Solution to Problem

A control apparatus according to the present invention is a control apparatus that controls behavior of a straddle-type vehicle. The control apparatus includes an execution unit that executes slip control in which front-wheel pressure-reduction operation and rear-wheel pressure-reduction operation are performed. In the front-wheel pressure-reduction operation, a front-wheel outlet valve is caused to become an open state from a close state and then is returned to the close state. The front-wheel outlet valve becomes the open state when energized and thus reduces pressure of brake fluid at a front wheel of the straddle-type vehicle. In the rear-wheel pressure-reduction operation, a rear-wheel outlet valve is caused to become an open state from a close state and then is returned to the close state. The rear-wheel outlet valve becomes the open state when energized and thus reduces pressure of brake fluid at a rear wheel of the straddle-type vehicle. The execution unit executes, in the slip control, prohibition operation to prohibit the rear-wheel outlet valve from becoming the open state at at least one point in time in a valve-closing period that is a period from a start to completion of closing of the front-wheel outlet valve at ending of the front-wheel pressure-reduction operation.

A control method according to the invention is a control method for controlling behavior of a straddle-type vehicle. The method includes executing, by an execution unit of a control apparatus, slip control in which front-wheel pressure-reduction operation and rear-wheel pressure-reduction operation are performed. In the front-wheel pressure-reduction operation, a front-wheel outlet valve is caused to become an open state from a close state and then is returned to the close state. The front-wheel outlet valve becomes the open state when energized and thus reduces pressure of brake fluid at a front wheel of the straddle-type vehicle. In the rear-wheel pressure-reduction operation, a rear-wheel outlet valve is caused to become an open state from a close state and then is returned to the close state. The rear-wheel outlet valve becomes the open state when energized and thus reduces pressure of brake fluid at a rear wheel of the straddle-type vehicle. The method includes executing, in the slip control by the execution unit, prohibition operation to prohibit the rear-wheel outlet valve from becoming the open state at at least one point in time in a valve-closing period that is a period from a start to completion of closing of the front-wheel outlet valve at ending of the front-wheel pressure-reduction operation.

### Advantageous Effects of Invention

In the control apparatus and the control method according to the invention, the execution unit of the control apparatus executes the slip control in which the front-wheel pressure-reduction operation and the rear-wheel pressure-reduction operation are performed. In the front-wheel pressure-reduction operation, the front-wheel outlet valve is caused to become the open state from the close state and then is returned to the close state. The front-wheel outlet valve becomes the open state when energized and thus reduces pressure of brake fluid at the front wheel of the straddle-type vehicle. In the rear-wheel pressure-reduction operation, the rear-wheel outlet valve is caused to become the open state from the close state and then is returned to the close state. The rear-wheel outlet valve becomes the open state when energized and thus reduces pressure of brake fluid at the rear wheel of the straddle-type vehicle. The execution unit executes, in the slip control, the prohibition operation to prohibit the rear-wheel outlet valve from becoming the open state at at least one point in time in the valve-closing period that is the period from the start to the completion of closing of the front-wheel outlet valve at the ending of the front-wheel pressure-reduction operation. Therefore, during the valve-closing period of the front-wheel outlet valve at the ending of the front-wheel pressure-reduction operation, generation of a magnetic field by energization to the rear-wheel outlet valve can be suppressed. Thereby, the front-wheel outlet valve can be less affected by the magnetic field. Accordingly, an increase in a pressure-reduction amount of brake fluid at the front wheel in the front-wheel pressure-reduction operation can be suppressed. As a result, the slip control in the straddle-type vehicle can be optimized.

### Brief Description of Drawings

Fig. 1 is a schematic view illustrating a schematic configuration of a straddle-type vehicle according to an embodiment of the present invention.
Fig. 2 is a block diagram illustrating an example of a functional configuration of a control apparatus according to an embodiment of the invention.
Fig. 3 is a schematic diagram illustrating a schematic configuration of a brake system of the straddle-type vehicle according to an embodiment of the invention.
Fig. 4 is a flowchart illustrating an example of a processing flow performed by the control apparatus according to an embodiment of the invention.

### Description of Embodiments

Hereinafter, a control apparatus and a control method according to the present invention are described with reference to the drawings.

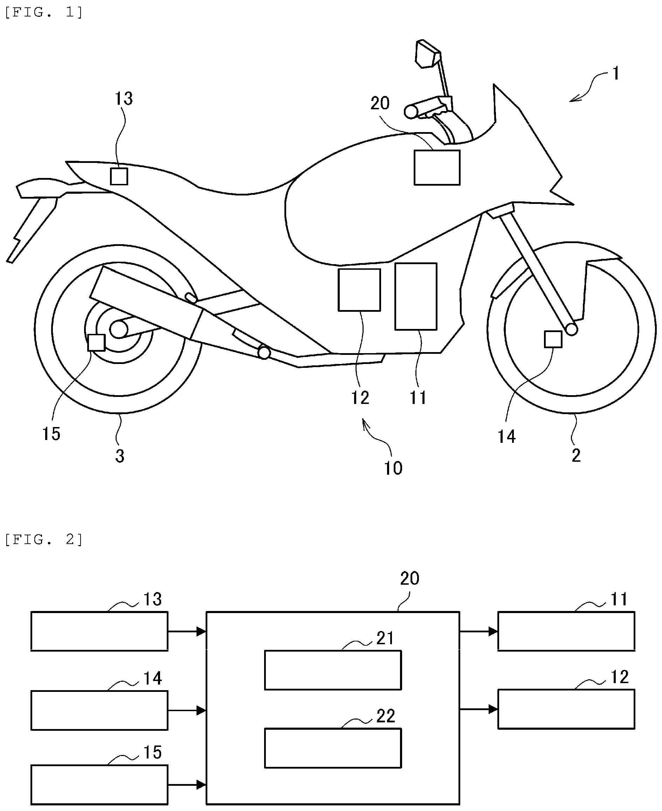

Note that, below, a control apparatus that is used for a two-wheeled motorcycle is described (see a straddle-type vehicle 1 in Fig. 1). However, a vehicle subject to control by the control apparatus according to the invention may be a straddle-type vehicle other than a two-wheeled motorcycle. The straddle-type vehicle means a vehicle which a rider rides astride. Examples of the straddle-type vehicle include a motorcycle (a two-wheeled motorcycle, a three-wheeled motorcycle) and a cycle. The motorcycle includes a vehicle whose power source is an engine, and a vehicle whose power source is an electric motor. Examples of the motorcycle include a motorbike, a scooter, and an electric scooter. The cycle means a vehicle that is capable of propelling on a road by pedal effort applied by a rider to pedals. The cycle includes an ordinary cycle, an electronically power assisted cycle, and an electric cycle.

Moreover, below, a case in which an engine (specifically, an engine 11 in Fig 1 described later) is mounted as a drive source capable of outputting motive power to drive a drive wheel is described. However, a drive source (for example, an electric motor) other than the engine may be mounted as the drive source, or a plurality of drive sources may be mounted.

Moreover, configurations, operation, and the like described below are merely illustration, and the control apparatus and the control method according to the invention are not limited to the case with such configurations, operation, and the like.

Moreover, below, the same or similar description is simplified or omitted as appropriate. In the drawings, regarding the same or similar members or parts, denotation of reference signs thereto is omitted or the same reference signs are given thereto. Further, illustration of fine structures may be simplified or omitted as appropriate.

### <Configuration of Straddle-Type Vehicle>

A configuration of the straddle-type vehicle 1 according to an embodiment of the invention is described with reference to Figs. 1 to 3.

Fig. 1 is a schematic view illustrating a schematic configuration of the straddle-type vehicle 1. The straddle-type vehicle 1 is a two-wheeled motorcycle that corresponds to an example of the straddle-type vehicle according to the invention. As illustrated in Fig. 1, the straddle-type vehicle 1 includes a front wheel 2, a rear wheel 3, the engine 11, a hydraulic pressure control unit 12, an inertial measurement unit (IMU) 13, a front-wheel speed sensor 14, a rear-wheel speed sensor 15, and a control apparatus (ECU) 20.

The engine 11 corresponds to an example of a drive source of the straddle-type vehicle 1, and is capable of outputting motive power to drive a drive wheel (specifically, the rear wheel 3). For example, the engine 11 includes one or more cylinders each having a combustion chamber formed therein, a fuel injection valve that injects fuel toward the combustion chamber, and a spark plug. Fuel is injected from the fuel injection valve to form, inside the combustion chamber, mixture gas containing air and fuel, and the mixture gas is ignited by the spark plug to combust. Therefore, a piston provided inside the cylinder reciprocates, and a crankshaft rotates. Moreover, a throttle valve is provided to an intake pipe of the engine 11, and an amount of air-intake to the combustion chamber changes in accordance with a throttle opening, which is an opening of the throttle valve.

The hydraulic pressure control unit 12 is a unit that functions to control braking force caused at a wheel. For example, the hydraulic pressure control unit 12 is provided on a hydraulic passage coupling a master cylinder to a wheel cylinder, and includes a component (for example, a control valve) to control brake hydraulic pressure of the wheel cylinder. By operation of the component of the hydraulic pressure control unit 12 being controlled, braking force caused at a wheel is controlled. Note that details of a brake system 10 including the the hydraulic pressure control unit 12 will be described later.

The inertial measurement unit 13 includes a three-axial gyro sensor and a three-directional acceleration sensor, and detects a posture of the straddle-type vehicle 1. For example, the inertial measurement unit 13 is provided to a trunk of the straddle-type vehicle 1. For example, the inertial measurement unit 13 detects a lean angle of the straddle-type vehicle 1, and outputs the detection result. The inertial measurement unit 13 may detect another physical quantity that can substantially be converted into the lean angle of the straddle-type vehicle 1. The lean angle corresponds to an angle indicating an incline of a vehicle body (specifically, the trunk) of the straddle-type vehicle 1 in a roll direction with respect to a vertically-up direction. The inertial measurement unit 13 may include only a part of the three-axial gyro sensor and/or a part of the three-directional acceleration sensor.

The front-wheel speed sensor 14 is a wheel speed sensor that detects a wheel speed of the front wheel 2 (for example, a rotational frequency per unit time [rpm], a movement distance per unit time [km/h], and the like of the front wheel 2), and outputs the detection result. The front-wheel speed sensor 14 may detect another physical quantity that can substantially be converted into the wheel speed of the front wheel 2. The front-wheel speed sensor 14 is provided to the front wheel 2.

The rear-wheel speed sensor 15 is a wheel speed sensor that detects a wheel speed of the rear wheel 3 (for example, a rotational frequency per unit time [rpm], a movement distance per unit time [km/h], and the like of the rear wheel 3), and outputs the detection result. The rear-wheel speed sensor 15 may detect another physical quantity that can substantially be converted into the wheel speed of the rear wheel 3. The rear-wheel speed sensor 15 is provided to the rear wheel 3.

The control apparatus 20 controls behavior of the straddle-type vehicle 1. For example, a part or the whole of the control apparatus 20 is configured by a microcomputer, a microprocessor unit, a memory, or the like. Furthermore, for example, a part or the whole of the control apparatus 20 may be configured by an updatable one such as firmware, or may be a program module or the like that is executed via a command from a CPU or the like. For example, the control apparatus 20 may be a single control apparatus, or may be divided into a plurality of parts.

Fig. 2 is a block diagram illustrating an example of a functional configuration of the control apparatus 20. As illustrated in Fig. 2, for example, the control apparatus 20 includes an acquisition unit 21 and an execution unit 22.

The acquisition unit 21 acquires information from each device of the straddle-type vehicle 1 and outputs the information to the execution unit 22. For example, the acquisition unit 21 acquires information from the inertial measurement unit 13, the front-wheel speed sensor 14, and the rear-wheel speed sensor 15. Note that, herein, acquiring information may include extraction or generation (for example, arithmetic computing) of information.

The execution unit 22 controls operation of each device of the straddle-type vehicle 1. For example, the execution unit 22 controls operation of the engine 11 and the hydraulic pressure control unit 12.

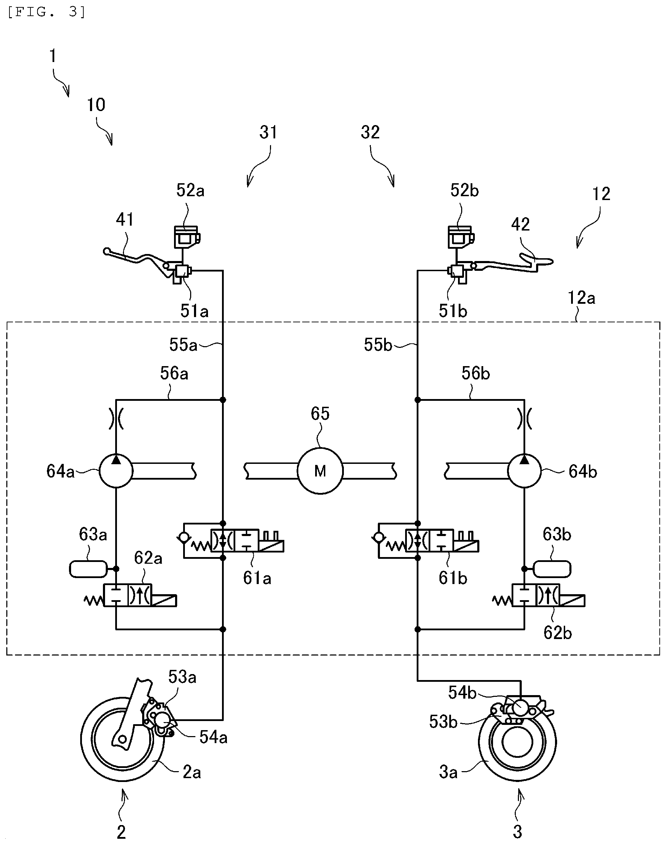

Here, with reference to Fig. 3, a schematic configuration of the brake system 10 of the straddle-type vehicle 1 and control of braking force caused in the straddle-type vehicle 1 are described. Fig. 3 is a schematic diagram illustrating a schematic configuration of the brake system 10 of the straddle-type vehicle 1. As illustrated in Fig. 3, the brake system 10 includes a front-wheel brake mechanism 31, a rear-wheel brake mechanism 32, a first brake operation part 41, and a second brake operation part 42. For example, the first brake operation part 41 is a brake lever. The front-wheel brake mechanism 31 brakes the front wheel 2 at least in conjunction with the first brake operation part 41. For example, the second brake operation part 42 is a brake pedal. The rear-wheel brake mechanism 32 brakes the rear wheel 3 at least in conjunction with the second brake operation part 42. A part of the front-wheel brake mechanism 31 and a part of the rear-wheel brake mechanism 32 are included in the hydraulic pressure control unit 12.

The front-wheel brake mechanism 31 includes a master cylinder 51a attached to the first brake operation part 41, a reservoir 52a attached to the master cylinder 51a, a brake caliper 53a held by a trunk and including a brake pad (not illustrated), a wheel cylinder 54a provided to the brake caliper 53a, a primary channel 55a through which brake fluid in the master cylinder 51a is flowed to the wheel cylinder 54a, and a secondary channel 56a through which brake fluid in the wheel cylinder 54a is released.

The primary channel 55a is provided with an inlet valve (EV) 61a. The secondary channel 56a bypasses a portion of the primary channel 55a between the wheel cylinder 54a side and the master cylinder 51a side with respect to the inlet valve 61a. The secondary channel 56a is provided with an outlet valve (AV) 62a, an accumulator 63a, and a pump 64a in this order from an upstream side.

The rear-wheel brake mechanism 32 includes a master cylinder 51b attached to the second brake operation part 42, a reservoir 52b attached to the master cylinder 51b, a brake caliper 53b held by the trunk and including a brake pad (not illustrated), a wheel cylinder 54b provided to the brake caliper 53b, a primary channel 55b through which brake fluid in the master cylinder 51b is flowed to the wheel cylinder 54b, and a secondary channel 56b through which brake fluid in the wheel cylinder 54b is released.

The primary channel 55b is provided with an inlet valve (EV) 61b. The secondary channel 56b bypasses a portion of the primary channel 55b between the wheel cylinder 54b side and the master cylinder 51b side with respect to the inlet valve 61b. The secondary channel 56b is provided with an outlet valve (AV) 62b, an accumulator 63b, and a pump 64b in this order from an upstream side.

Note that below the primary channel 55a and the primary channel 55b may simply be referred to as a primary channel 55 when they are not particularly distinguished from one another. The secondary channel 56a and the secondary channel 56b may simply be referred to as a secondary channel 56 when they are not particularly distinguished from one another. The inlet valve 61a and the inlet valve 61b may simply be referred to as an inlet valve 61 when they are not particularly distinguished from one another. The outlet valve 62a and the outlet valve 62b may simply be referred to as an outlet valve 62 when they are not particularly distinguished from one another. The accumulator 63a and the accumulator 63b may simply be referred to as an accumulator 63 when they are not particularly distinguished from one another. The pump 64a and the pump 64b may simply be referred to as a pump 64 when they are not particularly distinguished from one another.

The inlet valve 61 is an electromagnetic valve that opens in a no-energization state and closes in an energization state. That is, the inlet valve 61 becomes a close state when energized. The outlet valve 62 is an electromagnetic valve that closes in a no-energization state and opens in an energization state. That is, the outlet valve 62 becomes an open state when energized.

The hydraulic pressure control unit 12 includes components, such as the inlet valve 61, the outlet valve 62, the accumulator 63, and the pump 64, for controlling pressure of brake fluid, a base body 12a in which these components are provided and channels to configure the primary channel 55 and the secondary channel 56 are formed, and a motor 65.

Note that the base body 12a may be formed by a single member, or may be formed by a plurality of members. Moreover, in the case in which the base body 12a is formed by a plurality of members, the respective components may be provided separately to different members.

Operation of the above-described components and the motor 65 of the hydraulic pressure control unit 12 is controlled by the execution unit 22 of the control apparatus 20. Therefore, braking force caused at the front wheel 2 by the front-wheel brake mechanism 31 and braking force caused at the rear wheel 3 by the rear-wheel brake mechanism 32 are controlled.

At normal times (that is, in a setting in which braking force corresponding to braking operation by a rider is caused at a wheel), the control apparatus 20 opens the inlet valve 61 and closes the outlet valve 62. In this state, when the first brake operation part 41 is operated, in the front-wheel brake mechanism 31, a piston (not illustrated) of the master cylinder 51a is pushed in so as to increase pressure of brake fluid in the wheel cylinder 54a, and the brake pad (not illustrated) of the brake caliper 53a is pressed against a rotor 2a of the front wheel 2, thereby causing braking force at the front wheel 2. Moreover, when the second brake operation part 42 is operated, in the rear-wheel brake mechanism 32, a piston (not illustrated) of the master cylinder 51b is pushed in so as to increase pressure of brake fluid in the wheel cylinder 54b, and the brake pad (not illustrated) of the brake caliper 53b is pressed against a rotor 3a of the rear wheel 3, thereby causing braking force at the rear wheel 3.

Here, the execution unit 22 can execute slip control to control a slipping state of a wheel of the straddle-type vehicle 1 by controlling pressure of brake fluid at the wheel. Specifically, the execution unit 22 can execute anti-lock brake control as the slip control during braking operation by a rider of the straddle-type vehicle 1. In the anti-lock brake control, braking force at the wheel is adjusted to be braking force with which locking may be avoided. The execution unit 22 executes the anti-lock brake control in a case in which locking or a possibility of locking arises at the wheel. Note that the anti-lock brake control is merely an example of the slip control, and the slip control may include control whose purpose is not avoiding of locking of a wheel.

As described above, the hydraulic pressure control unit 12 includes the front-wheel brake mechanism 31 and the rear-wheel brake mechanism 32. The execution unit 22 can control braking force caused at the front wheel 2 by the front-wheel brake mechanism 31 and braking force caused at the rear wheel 3 by the rear-wheel brake mechanism 32 in an individual manner. Therefore, the execution unit 22 can execute the anti-lock brake control with respect to each of the front wheel 2 and the rear wheel 3 in an individual manner.

Below, the inlet valve 61a and the outlet valve 62a included in the front-wheel brake mechanism 31 may respectively be referred to as the front-wheel inlet valve 61a and the front-wheel outlet valve 62a. Moreover, the inlet valve 61b and the outlet valve 62b included in the rear-wheel brake mechanism 32 may respectively be referred to as the rear-wheel inlet valve 61b and the rear-wheel outlet valve 62b.

In the anti-lock brake control for the front wheel 2, for example, the execution unit 22 repetitively executes front-wheel pressure-reduction operation, front-wheel retention operation, and front-wheel pressure-amplification operation in this order. In the front-wheel pressure-reduction operation, pressure of brake fluid at the front wheel 2 (specifically, pressure of brake fluid in the wheel cylinder 54a) is reduced. In the front-wheel retention operation, pressure of brake fluid at the front wheel 2 is retained. In the front-wheel pressure-amplification operation, pressure of brake fluid at the front wheel 2 is increased.

First, in the front-wheel pressure-reduction operation, the execution unit 22 causes the front-wheel inlet valve 61a to become the close state and causes the front-wheel outlet valve 62a to become the open state. Accordingly, brake fluid flows from the wheel cylinder 54a into the accumulator 63a, pressure of brake fluid in the wheel cylinder 54a decreases, and braking force caused at the front wheel 2 decreases.

Next, in the front-wheel retention operation, the execution unit 22 causes both of the front-wheel inlet valve 61a and the front-wheel outlet valve 62a to become the close state. Accordingly, pressure of brake fluid in the wheel cylinder 54a is retained (for example, maintained at a substantially constant pressure), and braking force caused at the front wheel 2 is retained.

Next, in the front-wheel pressure-amplification operation, the execution unit 22 causes the front-wheel inlet valve 61a to become the open state and causes the front-wheel outlet valve 62a to become the close state. Accordingly, pressure of brake fluid in the master cylinder 51a acts on the wheel cylinder 54a, pressure of brake fluid in the wheel cylinder 54a increases, and braking force caused at the front wheel 2 increases.

Here, specifically, the front-wheel pressure-reduction operation is operation in which the front-wheel outlet valve 62a, which becomes the open state when energized and thus reduces pressure of brake fluid at the front wheel 2 of the straddle-type vehicle 1, is caused to become the open state from the close state and then is returned to the close state. That is, a series of operation to cause the front-wheel outlet valve 62a to become the open state from the close state and then return to the close state corresponds to single front-wheel pressure-reduction operation. Note that after the front-wheel pressure-reduction operation is continuously performed multiple times, the front-wheel retention operation may be performed.

Moreover, in the anti-lock brake control for the rear wheel 3, for example, the execution unit 22 repetitively executes rear-wheel pressure-reduction operation, rear-wheel retention operation, and rear-wheel pressure-amplification operation in this order. In the rear-wheel pressure-reduction operation, pressure of brake fluid at the rear wheel 3 (specifically, pressure of brake fluid in the wheel cylinder 54b) is reduced. In the rear-wheel retention operation, pressure of brake fluid at the rear wheel 3 is retained. In the rear-wheel pressure-amplification operation, pressure of brake fluid at the rear wheel 3 is increased.

First, in the rear-wheel pressure-reduction operation, the execution unit 22 causes the rear-wheel inlet valve 61b to become the close state and causes the rear-wheel outlet valve 62b to become the open state. Accordingly, brake fluid flows from the wheel cylinder 54b into the accumulator 63b, pressure of brake fluid in the wheel cylinder 54b decreases, and braking force caused at the rear wheel 3 decreases.

Next, in the rear-wheel retention operation, the execution unit 22 causes both of the rear-wheel inlet valve 61b and the rear-wheel outlet valve 62b to become the close state. Accordingly, pressure of brake fluid in the wheel cylinder 54b is retained (for example, maintained at a substantially constant pressure), and braking force caused at the rear wheel 3 is retained.

Next, in the rear-wheel pressure-amplification operation, the execution unit 22 causes the rear-wheel inlet valve 61b to become the open state and causes the rear-wheel outlet valve 62b to become the close state. Accordingly, pressure of brake fluid in the master cylinder 51b acts on the wheel cylinder 54b, pressure of brake fluid in the wheel cylinder 54b increases, and braking force caused at the rear wheel 3 increases.

Here, specifically, the rear-wheel pressure-reduction operation is operation in which the rear-wheel outlet valve 62b, which becomes the open state when energized and thus reduces pressure of brake fluid at the rear wheel 3 of the straddle-type vehicle 1, is caused to become the open state from the close state and then is returned to the close state. That is, a series of operation to cause the rear-wheel outlet valve 62b to become the open state from the close state and then return to the close state corresponds to single rear-wheel pressure-reduction operation. Note that after the rear-wheel pressure-reduction operation is continuously performed multiple times, the rear-wheel retention operation may be performed.

Note that although the brake system 10 is described above with reference to Fig. 3, the example of Fig. 3 is merely illustration, and the configuration of the brake system 10 is not limited to the example of Fig. 3. For example, a supply channel through which brake fluid in the master cylinder 51 is supplied to the secondary channel 56 may be further provided.

### <Operation of Control Apparatus>

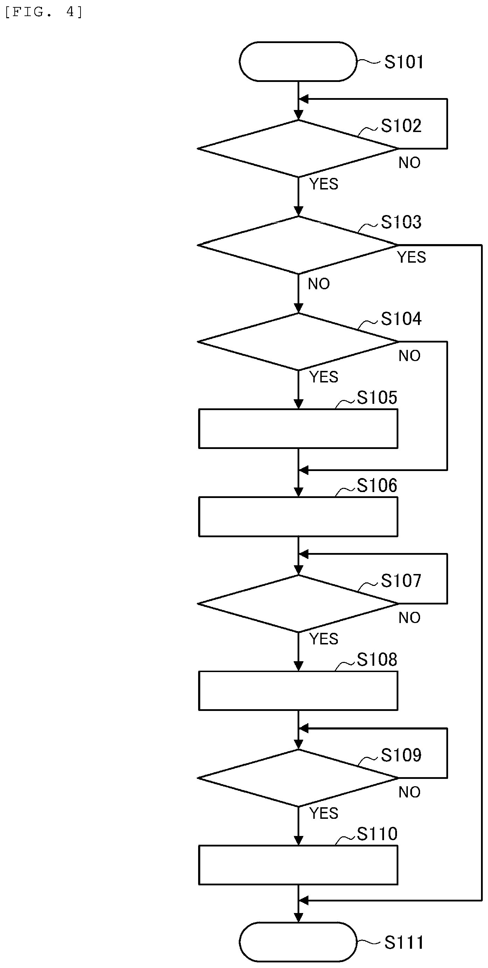

Operation of the control apparatus 20 according to an embodiment of the invention is described with reference to Fig. 4.

As described above, the execution unit 22 of the control apparatus 20 can execute the anti-lock brake control to each of the front wheel 2 and the rear wheel 3 in an individual manner. Here, the straddle-type vehicle 1 has a limited space for mounting devices as compared with a four-wheeled automobile or the like. Therefore, the front-wheel outlet valve 62a that is used in the front-wheel pressure-reduction operation, and the rear-wheel outlet valve 62b that is used in the rear-wheel pressure-reduction operation may be disposed closely to one another. In this case, influence of a magnetic field generated in association with driving of one of the outlet valves may cause a situation in which behavior of the other one of the outlet valves deviates from expected behavior. Specifically, in the case in which a magnetic field is generated in association with driving of one of the outlet valves, closing of the other one of the outlet valves may take longer time and a situation in which a pressure-reduction amount of brake fluid by the other one of the outlet valves increases more than expected may occur. Such a phenomenon may be a factor for difficulty in appropriate execution of the anti-lock brake control.

Therefore, in this embodiment, the execution unit 22 of the control apparatus 20 executes, in the anti-lock brake control, prohibition operation to prohibit the rear-wheel outlet valve 62b from becoming the open state at at least one point in time in a valve-closing period that is a period from a start to completion of closing of the front-wheel outlet valve 62a at the ending of the front-wheel pressure-reduction operation. Therefore, optimization of the anti-lock brake control in the straddle-type vehicle 1 can be achieved. Note that, in detail, executing the prohibition operation at at least one point in time in the valve-closing period means executing the prohibition operation over a period with a length including at least one point in time in the valve-closing period. Below, such exemplary processing performed by the control apparatus 20 is described.

Fig. 4 is a flowchart illustrating an example of a processing flow performed by the control apparatus 20. Step S101 in Fig. 4 corresponds to a start of a control flow illustrated in Fig. 4. Step S111 in Fig. 4 corresponds to an end of the control flow illustrated in Fig. 4. For example, the control flow illustrated in Fig. 4 is started while the front-wheel pressure-reduction operation is not executed.

When the control flow illustrated in Fig. 4 starts, at Step S102, the execution unit 22 determines whether the front-wheel pressure-reduction operation has started.

Specifically, the execution unit 22 starts the front-wheel pressure-reduction operation and causes the front-wheel outlet valve 62a to become the open state from the close state in a case in which locking or a possibility of locking arises at the front wheel 2. For example, the execution unit 22 determines that locking or a possibility of locking arises at the front wheel 2 when a slipping degree of the front wheel 2 exceeds a reference value. The slipping degree of a wheel is an index indicating a degree of slipping of the wheel with respect to a road surface. For example, the slipping degree may be represented by a value obtained by dividing a difference between a vehicle speed of the straddle-type vehicle 1 and a wheel speed of the wheel by the vehicle speed. For example, the reference value is set to a value at which whether locking or a possibility of locking arises at the front wheel 2 may appropriately be determined. Note that, for example, the acquisition unit 21 may acquire the vehicle speed of the straddle-type vehicle 1 based on the detection results of the front-wheel speed sensor 14 and the rear-wheel speed sensor 15.

If the front-wheel pressure-reduction operation is determined not to have started (Step S102: NO), the front-wheel pressure-reduction operation has not started, and Step S102 is repeated. On the other hand, if the front-wheel pressure-reduction operation is determined to have started, (Step S102: YES), the front-wheel pressure-reduction operation starts, and the processing proceeds to Step S103.

If the determination at Step S102 is YES, at Step S103, the execution unit 22 determines whether a prohibition condition for the prohibition operation is satisfied.

As described above, the prohibition operation is operation to prohibit the rear-wheel outlet valve 62b from becoming the open state. In the example of Fig. 4, operation to prohibit the rear-wheel pressure-reduction operation corresponds to the prohibition operation. As will be described later, in the example of Fig. 4, basically, the execution unit 22 starts the prohibition operation as the front-wheel pressure-reduction operation starts. That is, basically, the execution unit 22 prohibits the rear-wheel pressure-reduction operation as the front-wheel pressure-reduction operation starts. Therefore, during the valve-closing period of the front-wheel outlet valve 62a (that is, the period from the start to the completion of closing of the front-wheel outlet valve 62a) at the ending of the front-wheel pressure-reduction operation, generation of a magnetic field by energization to the rear-wheel outlet valve 62b can be suppressed. Thereby, the front-wheel outlet valve 62a can be less affected by the magnetic field. Accordingly, an increase in the pressure-reduction amount of brake fluid at the front wheel 2 in the front-wheel pressure-reduction operation can be suppressed.

However, in a case in which the prohibition condition for the prohibition operation is satisfied when the front-wheel pressure-reduction operation starts, the execution unit 22 prohibits the prohibition operation. That is, in the case in which the prohibition condition for the prohibition operation is satisfied when the front-wheel pressure-reduction operation starts, the execution unit 22 maintains a state in which the rear-wheel pressure-reduction operation is permitted.

For example, the prohibition condition for the prohibition operation may include a condition related to running state information that is information related to a running state of the straddle-type vehicle 1. That is, for example, the execution unit 22 may prohibit the prohibition operation based on the running state information. For example, the running state information is used to estimate running stability of the straddle-type vehicle 1.

For example, the execution unit 22 may prohibit the prohibition operation by using, as the running state information, turn state information related to a turning state of the straddle-type vehicle 1. For example, the turn state information includes information on a lean angle of the straddle-type vehicle 1. For example, the acquisition unit 21 can acquire the information on the lean angle of the straddle-type vehicle 1 from the inertial measurement unit 13. For example, it can be determined that running stability of the straddle-type vehicle 1 decreases as the lean angle increases. In the case in which the straddle-type vehicle 1 has low running stability, there is high necessity to facilitate avoidance of locking of the rear wheel 3 without prohibiting the rear-wheel pressure-reduction operation. Therefore, for example, in the case in which the lean angle is more than a reference angle, the execution unit 22 prohibits the prohibition operation. In this case, a condition that the lean angle is more than the reference angle is used as the prohibition condition. Note that, for example, the reference angle is set to a value at which whether running stability of the straddle-type vehicle 1 is low may appropriately be determined.

Note that the turn state information may be information other than the information on the lean angle of the straddle-type vehicle 1. For example, the turn state information may be information on a yaw rate of the straddle-type vehicle 1, information on lateral acceleration of the straddle-type vehicle 1, information on a rudder angle of the straddle-type vehicle 1, or map information. Moreover, the acquisition unit 21 may apply image processing to an image captured by a camera to identify the turning state of the straddle-type vehicle 1. The camera is provided to the straddle-type vehicle 1 to image the periphery of the straddle-type vehicle 1. The information identified in this way by using the image captured by the camera may also correspond to an example of the turn state information.

Moreover, for example, the execution unit 22 may prohibit the prohibition operation by using, as the running state information, deceleration state information related to a deceleration state of the straddle-type vehicle 1. For example, the deceleration state information includes information related to deceleration of the straddle-type vehicle 1. For example, the acquisition unit 21 can acquire the information on the deceleration of the straddle-type vehicle 1 based on a temporal change in speed of the straddle-type vehicle 1. For example, in a case in which the deceleration is excessively low, it can be determined that the straddle-type vehicle 1 runs on a road surface with a low coefficient of friction (for example, a frozen road surface) and running stability of the straddle-type vehicle 1 is low. As described above, in the case in which the straddle-type vehicle 1 has low running stability, there is high necessity to facilitate avoidance of locking of the rear wheel 3 without prohibiting the rear-wheel pressure-reduction operation. Therefore, for example, in the case in which the deceleration is less than reference deceleration, the execution unit 22 prohibits the prohibition operation. In this case, a condition that the deceleration is less than the reference deceleration is used as the prohibition condition. Note that, for example, the reference deceleration is set to a value at which whether the straddle-type vehicle 1 runs on a road surface with a low coefficient of friction may appropriately be determined.

Note that the deceleration state information may be information other than the information on the deceleration of the straddle-type vehicle 1. For example, the deceleration state information may be information on a rate of temporal change in the deceleration of the straddle-type vehicle 1.

Moreover, for example, the prohibition condition for the prohibition operation may include a condition related to road surface state information that is information related to a road surface state. That is, for example, the execution unit 22 may prohibit the prohibition operation based on the road surface state information. For example, the road surface state information is used to estimate running stability of the straddle-type vehicle 1.

For example, the execution unit 22 may prohibit the prohibition operation by using, as the road surface state information, information indicating whether a road surface on which the straddle-type vehicle 1 runs is a road surface with a low coefficient of friction (for example, a frozen road surface). As described above, in the case in which the straddle-type vehicle 1 runs on the road surface with a low coefficient of friction, the straddle-type vehicle 1 is determined to have low running stability. Moreover, as described above, in the case in which the straddle-type vehicle 1 has low running stability, there is high necessity to facilitate avoidance of locking of the rear wheel 3 without prohibiting the rear-wheel pressure-reduction operation. Therefore, for example, in the case in which the road surface on which the straddle-type vehicle 1 runs is the road surface with a low coefficient of friction, the execution unit 22 prohibits the prohibition operation. In this case, a condition that the road surface on which the straddle-type vehicle 1 runs is the road surface with a low coefficient of friction is used as the prohibition condition. For example, as described above, the acquisition unit 21 can acquire, based on the deceleration of the straddle-type vehicle 1, the information indicating whether the road surface on which the straddle-type vehicle 1 runs is the road surface with a low coefficient of friction as the road surface state information.

Note that the acquisition unit 21 may acquire, based on information other than the information on the deceleration of the straddle-type vehicle 1, information indicating whether the road surface on which the straddle-type vehicle 1 runs is the road surface with a low coefficient of friction as the road surface state information. For example, the acquisition unit 21 may apply image processing to an image captured by a camera that images the periphery of the straddle-type vehicle 1 and including a road surface, to acquire information indicating whether the road surface on which the straddle-type vehicle 1 runs is the road surface with a low coefficient of friction. Moreover, for example, the acquisition unit 21 may acquire, based on hydraulic pressure of brake fluid at the front wheel 2 at a start of the front-wheel pressure-reduction operation, information indicating whether the road surface on which the straddle-type vehicle 1 runs is the road surface with a low coefficient of friction. For example, it can be determined that a possibility that the road surface on which the straddle-type vehicle 1 runs is the road surface with a low coefficient of friction increases as the hydraulic pressure of brake fluid at the front wheel 2 at the start of the front-wheel pressure-reduction operation decreases.

Note that the road surface state information may be information other than the information indicating whether the road surface on which the straddle-type vehicle 1 runs is the road surface with a low coefficient of friction. For example, the road surface state information may be information on whether the road surface on which the straddle-type vehicle 1 runs is wet, or information related to undulations of the road surface on which the straddle-type vehicle 1 runs.

Moreover, for example, the prohibition condition for the prohibition operation may include a condition related to pressure-reduction amount information that is information related to a pressure-reduction amount (specifically, a target pressure-reduction amount) of brake fluid at the front wheel 2 in the front-wheel pressure-reduction operation. That is, for example, the execution unit 22 may prohibit the prohibition operation based on the pressure-reduction amount information. As described above, in the example of Fig. 4, performing the prohibition operation (that is, the operation to prohibit the rear-wheel pressure-reduction operation) can suppress an increase in the pressure-reduction amount of brake fluid at the front wheel 2 in the front-wheel pressure-reduction operation. For example, the pressure-reduction amount information is used to estimate necessity of suppressing, by the prohibition operation, an increase in the pressure-reduction amount of brake fluid at the front wheel 2.

For example, the execution unit 22 may prohibit the prohibition operation by using, as the pressure-reduction amount information, duration information related to duration of the front-wheel pressure-reduction operation. For example, the duration information may be information directly indicating the duration of the front-wheel pressure-reduction operation, or may be other information that can substantially be converted into the duration of the front-wheel pressure-reduction operation. The execution unit 22 uses various information (for example, information including a slipping degree of the front wheel 2) to determine the duration of the front-wheel pressure-reduction operation when starting the front-wheel pressure-reduction operation.

Here, it can be determined that the pressure-reduction amount (specifically, the target pressure-reduction amount) of brake fluid at the front wheel 2 in the front-wheel pressure-reduction operation increases as the duration of the front-wheel pressure-reduction operation increases. In the case in which the pressure-reduction amount (specifically, the target pressure-reduction amount) of brake fluid at the front wheel 2 in the front-wheel pressure-reduction operation is large, a rate of a change amount in the pressure-reduction amount attributed to execution of the prohibition operation with respect to the pressure-reduction amount is low. Thereby, necessity to suppress by the prohibition operation an increase in the pressure-reduction amount of brake fluid at the front wheel 2 is low. Therefore, for example, in the case in which the duration of the front-wheel pressure-reduction operation is more than a reference time, the execution unit 22 prohibits the prohibition operation. In this case, a condition that the duration of the front-wheel pressure-reduction operation is more than the reference time is used as the prohibition condition. Note that, for example, the reference time is set to a value at which whether necessity to suppress by the prohibition operation an increase in the pressure-reduction amount of brake fluid at the front wheel 2 is low may appropriately be determined.

Note that the pressure-reduction amount information may be information other than the duration information related to the duration of the front-wheel pressure-reduction operation. For example, the pressure-reduction amount information may be information directly indicating the pressure-reduction amount (specifically, the target pressure-reduction amount) of brake fluid at the front wheel 2 in the front-wheel pressure-reduction operation. For example, the acquisition unit 21 may acquire, based on the duration of the front-wheel pressure-reduction operation, information directly indicating the pressure-reduction amount (specifically, the target pressure-reduction amount) of brake fluid at the front wheel 2 in the front-wheel pressure-reduction operation.

The examples that may be used as the prohibition condition for the prohibition operation are described above. Here, all of the conditions described above may be used as the prohibition condition, any one or some of the conditions described above may be used as the prohibition condition, or in addition or alternatively to the conditions described above, a condition other than the above-described conditions may be used as the prohibition condition. Moreover, for example, the execution unit 22 may prohibit the prohibition operation when at least one of a plurality of prohibition conditions is satisfied. Alternatively, the execution unit 22 may prohibit the prohibition operation when all of a plurality of prohibition conditions are satisfied.

If the prohibition condition for the prohibition operation is determined to be satisfied (Step S103: YES), the control flow illustrated in Fig. 4 ends. On the other hand, if the prohibition condition for the prohibition operation is determined not to be satisfied (Step S103: NO), the processing proceeds to Step S104.

If the determination at Step S103 is NO, at Step S104, the execution unit 22 determines whether the rear-wheel pressure-reduction operation is in execution.

If the rear-wheel pressure-reduction operation is determined to be in execution (Step S104: YES), the processing proceeds to Step S105. On the other hand, if the rear-wheel pressure-reduction operation is determined not to be in execution (Step S104: NO), the processing proceeds to Step S106 without performing Step S105.

If the determination at Step S104 is YES, at Step S105, the execution unit 22 starts the rear-wheel retention operation.

Specifically, if the determination at Step S104 is YES, the rear-wheel pressure-reduction operation is in execution, and therefore, the rear-wheel inlet valve 61b is in the close state and the rear-wheel outlet valve 62b is in the open state. Thereby, at Step S105, the execution unit 22 causes the rear-wheel outlet valve 62b to become the close state from the open state to start the rear-wheel retention operation in which pressure of brake fluid at the rear wheel 3 is retained.

If the determination at Step S104 is NO, or subsequent to Step S105, the execution unit 22 prohibits the rear-wheel pressure-reduction operation at Step S106.

In the case in which the rear-wheel pressure-reduction operation is permitted, for example, when a slipping degree of the rear wheel 3 exceeds the reference value, the execution unit 22 determines that locking or a possibility of locking arises at the rear wheel 3, and starts the rear-wheel pressure-reduction operation. On the other hand, in the case in which the rear-wheel pressure-reduction operation is prohibited, for example, even when the slipping degree of the rear wheel 3 exceeds the reference value, the execution unit 22 does not start the rear-wheel pressure-reduction operation.

Subsequent to Step S106, at Step S107, the execution unit 22 determines whether the duration of the front-wheel pressure-reduction operation has passed since the start of the front-wheel pressure-reduction operation.

As described above, the execution unit 22 uses various information (for example, information including a slipping degree of the front wheel 2) to determine the duration of the front-wheel pressure-reduction operation when starting the front-wheel pressure-reduction operation, and continues the front-wheel pressure-reduction operation for the determined duration.

If the duration of the front-wheel pressure-reduction operation is determined not to have passed since the start of the front-wheel pressure-reduction operation (Step S107: NO), Step S107 is repeated. On the other hand, if the duration of the front-wheel pressure-reduction operation is determined to have passed since the start of the front-wheel pressure-reduction operation (Step S107: YES), the processing proceeds to Step S108.

If the determination at Step S107 is YES, at Step S108, the execution unit 22 outputs a valve-close command for the front-wheel outlet valve 62a.

The valve-close command for the front-wheel outlet valve 62a is a command to cause the front-wheel outlet valve 62a to become the close state from the open state, and is output from the control apparatus 20 to the front-wheel outlet valve 62a. When the valve-close command is output to the front-wheel outlet valve 62a, the front-wheel outlet valve 62a starts to close. Here, a period with a time width from a start to completion of closing of the front-wheel outlet valve 62a corresponds to the valve-closing period of the front-wheel outlet valve 62a.

Subsequent to Step S108, at Step S109, the execution unit 22 determines whether a reference time has passed since a point in time at which the valve-close command is output to the front-wheel outlet valve 62a.

As will be described later, in the case in which the reference time has passed since the point in time at which the valve-close command is output to the front-wheel outlet valve 62a, the execution unit 22 permits the rear-wheel pressure-reduction operation. That is, in the case in which the reference time has passed since the point in time at which the valve-close command is output to the front-wheel outlet valve 62a, the execution unit 22 ends the prohibition operation. Here, the reference time at Step S109 is set based on length information that is information related to a length of the valve-closing period of the front-wheel outlet valve 62a. That is, the execution unit 22 determines an end of the prohibition operation based on the length information.

For example, an expected length that is expected as the length of the valve-closing period of the front-wheel outlet valve 62a is obtained in advance through an experiment or the like. For example, the execution unit 22 uses time longer than the expected length as the reference time. Therefore, the execution unit 22 can end the prohibition operation at a point in time after the end of the valve-closing period of the front-wheel outlet valve 62a (that is, a point in time at which the front-wheel outlet valve 62a completes to close). However, the reference time may match the expected length or be less than the expected length.

If the reference time is determined not to have passed since the point in time at which the valve-close command is output to the front-wheel outlet valve 62a (Step S109: NO), Step S109 is repeated. On the other hand, if the reference time is determined to have passed since the point in time at which the valve-close command is output to the front-wheel outlet valve 62a (Step S109: YES), the processing proceeds to Step S110.

If the determination at Step S109 is YES, at Step S110, the execution unit 22 permits the rear-wheel pressure-reduction operation and ends the control flow illustrated in Fig. 4.

As described above, in this embodiment, the execution unit 22 of the control apparatus 20 executes in the slip control (in the example, the anti-lock brake control) the prohibition operation to prohibit the rear-wheel outlet valve 62b from becoming the open state (in the example, the operation to prohibit the rear-wheel pressure-reduction operation) at at least one point in time in the valve-closing period that is the period from the start to the completion of closing of the front-wheel outlet valve 62a at the ending of the front-wheel pressure-reduction operation. Therefore, during the valve-closing period of the front-wheel outlet valve 62a at the ending of the front-wheel pressure-reduction operation, generation of a magnetic field by energization to the rear-wheel outlet valve 62b can be suppressed. Thereby, the front-wheel outlet valve 62a can be less affected by the magnetic field. Accordingly, an increase in the pressure-reduction amount of brake fluid at the front wheel 2 in the front-wheel pressure-reduction operation can be suppressed. As a result, the slip control in the straddle-type vehicle 1 can be optimized.

Here, the straddle-type vehicle 1 has higher capability to brake the straddle-type vehicle 1 through braking of the front wheel 2 by the front-wheel brake mechanism 31 than capability to brake the straddle-type vehicle 1 through braking of the rear wheel 3 by the rear-wheel brake mechanism 32. For example, a maximum value of braking force that can be caused at the front wheel 2 by the front-wheel brake mechanism 31 is larger than a maximum value of braking force that can be caused at the rear wheel 3 by the rear-wheel brake mechanism 32. Therefore, as described above, prioritizing the front-wheel pressure-reduction operation over the rear-wheel pressure-reduction operation can suppress a decrease in capability to brake the straddle-type vehicle 1. Moreover, in the straddle-type vehicle 1, from a perspective of suppressing a decrease in safety through stabilization of behavior of the straddle-type vehicle 1, generally, the front-wheel pressure-reduction operation is desirably prioritized over the rear-wheel pressure-reduction operation. Therefore, as described above, prioritizing the front-wheel pressure-reduction operation over the rear-wheel pressure-reduction operation can also suppress a decrease in safety of the straddle-type vehicle 1.

The example of the processing performed by the control apparatus 20 is described above with reference to Fig. 4. However, the processing performed by the control apparatus 20 may be processing in which a change is added to the exemplary processing described above.

For example, describe above is the example in which the execution unit 22 starts the prohibition operation (that is, prohibits the rear-wheel pressure-reduction operation) at the point in time before the start of the valve-closing period of the front-wheel outlet valve 62a, and ends the prohibition operation (that is, permits the rear-wheel pressure-reduction operation) at the point in time after the end of the valve-closing period of the front-wheel outlet valve 62a. However, the start and the end of the prohibition operation are not limited to the examples described above as long as the execution unit 22 executes the prohibition operation at at least one point in time in the valve-closing period of the front-wheel outlet valve 62a. For example, the execution unit 22 may start the prohibition operation at a point in time after the start of the valve-closing period of the front-wheel outlet valve 62a. Note that, unlikely to the example, the execution unit 22 may not start the prohibition operation as the front-wheel pressure-reduction operation starts. For example, the execution unit 22 may start the prohibition operation at a point in time after the start of the front-wheel pressure-reduction operation and before the start of the valve-closing period of the front-wheel outlet valve 62a. Moreover, for example, the execution unit 22 may end the prohibition operation at a point in time before the end of the valve-closing period of the front-wheel outlet valve 62a.

Moreover, for example, described above is the example in which, at Step S103, the execution unit 22 determines whether the prohibition condition for the prohibition operation is satisfied. However, Step S103 may be performed after Step S106 (that is, the processing to prohibit the rear-wheel pressure-reduction operation). Moreover, at Step S103, whether a part of the prohibition condition for the prohibition operation is satisfied may be determined, and then after Step S106, whether another part of the prohibition condition for the prohibition operation is satisfied may be determined. Note that, after Step S106, if the prohibition condition for the prohibition operation is determined to be satisfied, the execution unit 22 permits the rear-wheel pressure-reduction operation. Moreover, Step S103 may be omitted in the example of Fig. 4.

### <Effect Of Control Apparatus>

An effect of the control apparatus 20 according to an embodiment of the invention is described.

The control apparatus 20 includes the execution unit 22 that executes the slip control (in the example, the anti-lock brake control) in which the front-wheel pressure-reduction operation and the rear-wheel pressure-reduction operation are performed. In the front-wheel pressure-reduction operation, the front-wheel outlet valve 62a is caused to become the open state from the close state and then is returned to the close state. The front-wheel outlet valve 62a becomes the open state when energized and thus reduces pressure of brake fluid at the front wheel 2 of the straddle-type vehicle 1. In the rear-wheel pressure-reduction operation, the rear-wheel outlet valve 62b is caused to become the open state from the close state and then is returned to the close state. The rear-wheel outlet valve 62b becomes the open state when energized and thus reduces pressure of brake fluid at the rear wheel 3 of the straddle-type vehicle 1. Then, the execution unit 22 executes, in the slip control, the prohibition operation to prohibit the rear-wheel outlet valve 62b from becoming the open state at at least one point in time in the valve-closing period that is the period from the start to the completion of closing of the front-wheel outlet valve 62a at the ending of the front-wheel pressure-reduction operation. Therefore, during the valve-closing period of the front-wheel outlet valve 62a at the ending of the front-wheel pressure-reduction operation, generation of a magnetic field by energization to the rear-wheel outlet valve 62b can be suppressed. Thereby, the front-wheel outlet valve 62a can be less affected by the magnetic field. Accordingly, an increase in the pressure-reduction amount of brake fluid at the front wheel 2 in the front-wheel pressure-reduction operation can be suppressed. As a result, the slip control in the straddle-type vehicle 1 can be optimized.

Here, the straddle-type vehicle 1 has higher capability to brake the straddle-type vehicle 1 through braking of the front wheel 2 by the front-wheel brake mechanism 31 than capability to brake the straddle-type vehicle 1 through braking of the rear wheel 3 by the rear-wheel brake mechanism 32. For example, the maximum value of braking force that can be caused at the front wheel 2 by the front-wheel brake mechanism 31 is larger than the maximum value of braking force that can be caused at the rear wheel 3 by the rear-wheel brake mechanism 32. Therefore, as described above, prioritizing the front-wheel pressure-reduction operation over the rear-wheel pressure-reduction operation can suppress a decrease in capability to brake the straddle-type vehicle 1. Moreover, in the straddle-type vehicle 1, from the perspective of suppressing a decrease in safety through stabilization of behavior of the straddle-type vehicle 1, generally, the front-wheel pressure-reduction operation is desirably prioritized over the rear-wheel pressure-reduction operation. Therefore, as described above, prioritizing the front-wheel pressure-reduction operation over the rear-wheel pressure-reduction operation can also suppress a decrease in safety of the straddle-type vehicle 1.

Preferably, in the control apparatus 20, the execution unit 22 starts the prohibition operation at the point in time before the start of the valve-closing period. Therefore, in the valve-closing period, generation of a magnetic field by energization to the rear-wheel outlet valve 62b can be suppressed at least during the period including the start of the valve-closing period. Thereby, influence of the magnetic field on the front-wheel outlet valve 62a can effectively be reduced. Accordingly, an increase in the pressure-reduction amount of brake fluid at the front wheel 2 in the front-wheel pressure-reduction operation can effectively be suppressed.

Preferably, in the control apparatus 20, the execution unit 22 starts the prohibition operation as the front-wheel pressure-reduction operation starts. Therefore, starting the prohibition operation at the point in time before the start of the valve-closing period can appropriately be implemented. Thereby, an effective decrease in influence of a magnetic field by energization to the rear-wheel outlet valve 62b on the front-wheel outlet valve 62a can appropriately be achieved.

Preferably, in the control apparatus 20, the execution unit 22 ends the prohibition operation at the point in time after the end of the valve-closing period. Therefore, in the valve-closing period, generation of a magnetic field by energization to the rear-wheel outlet valve 62b can be suppressed at least during the period including the end of the valve-closing period. Thereby, influence of the magnetic field on the front-wheel outlet valve 62a can effectively be reduced. Accordingly, an increase in the pressure-reduction amount of brake fluid at the front wheel 2 in the front-wheel pressure-reduction operation can effectively be suppressed.

Preferably, in the control apparatus 20, the execution unit 22 determines the end of the prohibition operation based on the length information that is the information related to the length of the valve-closing period. Therefore, ending the prohibition operation at the point in time after the end of the valve-closing period can appropriately be implemented. Thereby, an effective decrease in influence of a magnetic field by energization to the rear-wheel outlet valve 62b on the front-wheel outlet valve 62a can appropriately be achieved.

Preferably, in the control apparatus 20, when the rear-wheel pressure-reduction operation is not executed at the start of the prohibition operation, in the prohibition operation, the execution unit 22 maintains the rear-wheel outlet valve 62b in the close state and prohibits the rear-wheel pressure-reduction operation. Therefore, in the case in which the rear-wheel pressure-reduction operation is not executed at the start of the prohibition operation, prohibiting the rear-wheel outlet valve 62b from becoming the open state can appropriately be implemented.

Preferably, in the control apparatus 20, when the rear-wheel pressure-reduction operation is in execution at the start of the prohibition operation, in the prohibition operation, the execution unit 22 causes the rear-wheel outlet valve 62b to become the close state from the open state to start the retention operation (in the example, the rear-wheel retention operation) and prohibits the rear-wheel pressure-reduction operation. In the retention operation, pressure of brake fluid at the rear wheel 3 is retained. Therefore, in the case in which the rear-wheel pressure-reduction operation is in execution at the start of the prohibition operation, prohibiting the rear-wheel outlet valve 62b from becoming the open state can appropriately be implemented.

Preferably, in the control apparatus 20, the execution unit 22 prohibits the prohibition operation based on the running state information that is the information related to the running state of the straddle-type vehicle 1. Therefore, the prohibition operation can be prohibited in accordance with running stability of the straddle-type vehicle 1 in consideration of the running state of the straddle-type vehicle 1.

Preferably, in the control apparatus 20, the running state information includes the turn state information related to the turning state of the straddle-type vehicle 1. Therefore, prohibiting the prohibition operation can appropriately be implemented in accordance with running stability of the straddle-type vehicle 1.

Preferably, in the control apparatus 20, the running state information includes the deceleration state information related to the deceleration state of the straddle-type vehicle 1. Therefore, prohibiting the prohibition operation can appropriately be implemented in accordance with running stability of the straddle-type vehicle 1.

Preferably, in the control apparatus 20, the execution unit 22 prohibits the prohibition operation based on the road surface state information that is the information related to the road surface state. Therefore, the prohibition operation can be prohibited in accordance with running stability of the straddle-type vehicle 1 in consideration of the road surface state.

Preferably, in the control apparatus 20, the execution unit 22 prohibits the prohibition operation based on the pressure-reduction amount information that is the information related to the pressure-reduction amount of brake fluid at the front wheel 2 in the front-wheel pressure-reduction operation. Therefore, the prohibition operation can be prohibited in accordance with necessity to suppress by the prohibition operation an increase in the pressure-reduction amount of brake fluid at the front wheel 2 in consideration of the pressure-reduction amount of brake fluid at the front wheel 2 in the front-wheel pressure-reduction operation.

Preferably, in the control apparatus 20, the pressure-reduction amount information includes the duration information that is the information related to the duration of the front-wheel pressure-reduction operation. Therefore, prohibiting the prohibition operation can appropriately be implemented in accordance with necessity to suppress by the prohibition operation an increase in the pressure-reduction amount of brake fluid of the front wheel 2.

The invention is not limited to the description of the embodiment. For example, only a part of the embodiment may be practiced.

### Reference Signs List

1: Straddle-type vehicle
2: Front wheel
2a: Rotor
3: Rear wheel
3a: Rotor
10: Brake system
11: Engine
12: Hydraulic pressure control unit
12a: Base body
13: Inertial measurement unit
14: Front-wheel speed sensor
15: Rear-wheel speed sensor
20: Control apparatus
21: Acquisition unit
22: Execution unit
31: Front-wheel brake mechanism
32: Rear-wheel brake mechanism
41: First brake operation part
42: Second brake operation part
51a: Master cylinder
51b: Master cylinder
52a: Reservoir
52b: Reservoir
53a: Brake caliper
53b: Brake caliper
54a: Wheel cylinder
54b: Wheel cylinder
55a: Primary channel
55b: Primary channel
56a: Secondary channel
56b: Secondary channel
61a: Inlet valve
61b: Inlet valve
62a: Outlet valve
62b: Outlet valve
63a: Accumulator
63b: Accumulator
64a: Pump
64b: Pump
65: Motor

## Claims

1. A control apparatus (20) configured to control behavior of a straddle-type vehicle (1), the control apparatus comprising:
an execution unit (22) configured to execute slip control in which front-wheel pressure-reduction operation and rear-wheel pressure-reduction operation are performed, wherein
in the front-wheel pressure-reduction operation, a front-wheel outlet valve (62a) is caused to become an open state from a close state and then is returned to the close state, the front-wheel outlet valve (62a) becoming the open state when energized and thus reducing pressure of brake fluid at a front wheel (2) of the straddle-type vehicle (1), and
in the rear-wheel pressure-reduction operation, a rear-wheel outlet valve (62b) is caused to become an open state from a close state and then is returned to the close state, the rear-wheel outlet valve (62b) becoming the open state when energized and thus reducing pressure of brake fluid at a rear wheel (3) of the straddle-type vehicle (1), wherein
the execution unit (22) executes, in the slip control, prohibition operation to prohibit the rear-wheel outlet valve (62b) from becoming the open state at at least one point in time in a valve-closing period that is a period from a start to completion of closing of the front-wheel outlet valve (62a) at ending of the front-wheel pressure-reduction operation.

2. The control apparatus according to claim 1, wherein the execution unit (22) starts the prohibition operation at a point in time before a start of the valve-closing period.

3. The control apparatus according to claim 2, wherein the execution unit (22) starts the prohibition operation as the front-wheel pressure-reduction operation starts.

4. The control apparatus according to claim 1, wherein the execution unit (22) ends the prohibition operation at a point in time after an end of the valve-closing period.

5. The control apparatus according to claim 4, wherein the execution unit (22) determines an end of the prohibition operation based on length information that is information related to a length of the valve-closing period.

6. The control apparatus according to claim 1, wherein when the rear-wheel pressure-reduction operation is not executed at a start of the prohibition operation, in the prohibition operation, the execution unit (22) maintains the rear-wheel outlet valve (62b) in the close state and prohibits the rear-wheel pressure-reduction operation.

7. The control apparatus according to claim 1, wherein when the rear-wheel pressure-reduction operation is in execution at a start of the prohibition operation, in the prohibition operation, the execution unit (22) causes the rear-wheel outlet valve (62b) to become the close state from the open state to start retention operation and prohibits the rear-wheel pressure-reduction operation, wherein in the retention operation, pressure of brake fluid at the rear wheel (3) is retained.

8. The control apparatus according to any one of claims 1 to 7, wherein the execution unit (22) prohibits the prohibition operation based on running state information that is information related to a running state of the straddle-type vehicle (1).

9. The control apparatus according to claim 8, wherein the running state information includes turn state information related to a turning state of the straddle-type vehicle (1).

10. The control apparatus according to claim 8, wherein the running state information includes deceleration state information related to a deceleration state of the straddle-type vehicle (1).

11. The control apparatus according to any one of claims 1 to 7, wherein the execution unit (22) prohibits the prohibition operation based on road surface state information that is information related to a road surface state.

12. The control apparatus according to any one of claims 1 to 7, wherein the execution unit (22) prohibits the prohibition operation based on pressure-reduction amount information that is information related to a pressure-reduction amount of brake fluid at the front wheel (2) in the front-wheel pressure-reduction operation.

13. The control apparatus according to claim 12, wherein the pressure-reduction amount information includes duration information that is information related to duration of the front-wheel pressure-reduction operation.

14. A control method for controlling behavior of a straddle-type vehicle (1), comprising the step of:
executing, by an execution unit (22) of a control apparatus (20), slip control in which front-wheel pressure-reduction operation and rear-wheel pressure-reduction operation are performed, wherein
in the front-wheel pressure-reduction operation, a front-wheel outlet valve (62a) is caused to become an open state from a close state and then is returned to the close state, the front-wheel outlet valve (62a) becoming the open state when energized and thus reducing pressure of brake fluid at a front wheel (2) of the straddle-type vehicle (1), and
in the rear-wheel pressure-reduction operation, a rear-wheel outlet valve (62b) is caused to become an open state from a close state and then is returned to the close state, the rear-wheel outlet valve (62b) becoming the open state when energized and thus reducing pressure of brake fluid at a rear wheel (3) of the straddle-type vehicle (1); and
executing, in the slip control by the execution unit (22), prohibition operation to prohibit the rear-wheel outlet valve (62b) from becoming the open state at at least one point in time in a valve-closing period that is a period from a start to completion of closing of the front-wheel outlet valve (62a) at ending of the front-wheel pressure-reduction operation.
